(19) **Europäisches Patentamt / European Patent Office / Office européen des brevets**

(11) **EP 3 246 878 A1**

(12) **EUROPEAN PATENT APPLICATION**

(43) Date of publication:
**22.11.2017 Bulletin 2017/47**

(51) Int Cl.:
***G06T 7/90*** (2017.01)

(21) Application number: **17170344.0**

(22) Date of filing: **10.05.2017**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.05.2016 EP 16305571**

(71) Applicant: **Thomson Licensing
92130 Issy-les-Moulineaux (FR)**

</td><td>

(72) Inventors:
• **DUCHENE, Sylvain
  35576 CESSON-SÉVIGNÉ (FR)**
• **POULI, Tania
  35576 CESSON-SÉVIGNÉ (FR)**
• **PEREZ, Patrick
  35576 CESSON-SÉVIGNÉ (FR)**

(74) Representative: **Browaeys, Jean-Philippe
TECHNICOLOR
1-5, rue Jeanne d'Arc
92130 Issy-les-Moulineaux (FR)**

</td></tr>
</table>

(54) **METHOD TO DETERMINE CHROMATIC COMPONENT OF ILLUMINATION SOURCES OF AN IMAGE**

(57) Method comprising:
- segmenting said image into segmenting areas,
- for each segmenting area, computing at least one representative color variation between pixels positioned in said segmenting area,
- clustering said representative color variations into chrominance clusters,
- in each chrominance cluster, determining a principal direction along which representative color variations of this chrominance cluster have the highest luminance variation components, the chromatic components of the intersection of this principal direction with the plane of highest luminance being then considered as the chromatic component of the illumination source of this chrominance cluster.

Fig.4

**Description**

Technical Field

This invention concerns the computation of the hue of a white point in each segmenting area of an image, notably when there is a plurality of illuminants. This invention is more generally related to white balancing of multi-illuminated color images.

Background Art

Existing automatic methods for computing white balance of an image for multiple light sources illuminating this image generally analyze this image locally in order to find local white points and propagate these local white points to the other pixels of the image.

For instance, in the article entitled "Color constancy and non-uniform illumination: Can existing algorithms work?", by Michael Bleier, Christian Riess, Shida Beigpour, Eva Eibenberger, Elli Angelopoulou, Tobias Troger, and André Kaup, published in Computer Vision Workshops (ICCV Workshops), 2011 IEEE International Conference on, pages 774-781, the image is divided into patches and a single white point is computed for each patch. In this document, patches are computed using super-pixel segmentation. A smoothing step may take place to ensure that there are no sharp discontinuities between patches when the computed white points are applied to the image.

In the article entitled "Multi-illuminant estimation with conditional random fields", by Shida Beigpour, Christian Riess, Joost van de Weijer, and Elli Angelopoulou, published in Image Processing, IEEE Transactions on, 23(1): pages 83-96, 2014, it is proposed to cluster the locally computed white points using K-means clustering to determine a small set of dominant white point colors. Then these white point colors are propagated to the rest of the image using an optimization scheme that encourages image patches to obtain a white point close to the local white point estimate as well as its neighboring patches. The resulting illumination mixture map can be further filtered using for instance a Gaussian filter to remove artifacts.

The above methods can then detect more than a single illuminant in an image, but within each patch or super-pixel, filtering is applied in an isotropic manner. In all the above cases, the output of the described algorithms is a mixture map of illumination that is the same size as the image. This map is filtered with a smoothing step to avoid discontinuities between adjacent patches but that may lead to disturbing colors halos across image edges.

Summary of invention

An object of the invention is to propose an advantageous method to determine chromatic component of illumination sources of an image, comprising:

- segmenting said image into segmenting areas using a semantic segmenting method,
- for each of said segmenting areas, computing at least one representative color variation between pixels positioned in said segmenting area,
- in an opponent color space separating chrominance from luminance, clustering said representative color variations into chrominance clusters, according to a chromatic similarity criteria computed between said representative color variations,
- in each chrominance cluster, computing or determining a chromatic/principal direction along which representative color variations of this chrominance cluster have the highest luminance variation components, the chromatic components of the intersection of this chromatic/principal direction with the plane of highest luminance of said opponent color space being then considered as the chromatic component of the illumination source common to the different segmenting areas represented by the representative color variations of this chrominance cluster.

Preferably, said semantic segmenting method is such that, within each segmenting area, approximate constant reflectance, approximate constant indirect lighting and mostly one illuminating source can be assumed.

It means that the segmentation of the image of a scene is based on two key ideas. First, such a segmentation means that nearby pixels within the same segmenting area of the image correspond to elements of this scene that are likely to belong to the same surface of the same object of this scene and therefore correspond to elements that have similar material properties and then similar reflectance. It means that, in most cases, color variations between such nearby pixels are likely to be due to directional illumination variations.

Second, such a segmentation means that color variations between such nearby pixels are likely to be due to the same illumination source. In other words, it means that, if the scene is illuminated by multiple light sources, we are likely to find variations around a few different colors across the image, corresponding to the colors of the illumination sources. For instance, if a red illumination source is present, we are likely to find variations (i.e. gradients) along the red component.

Preferably, said pixels between which representative color variations of a segmenting area are computed comprises control pixels distributed along directions crossing said segmenting area passing through a centroid of said segmenting area.

Preferably, said chromatic similarity criteria is computed between the chromatic components (a, b) of said representative color variations.

Preferably, the similarity weight between two representative color variations that is used for the chrominance clustering step is a decreasing function of a chromatic distance between these two representative color variations. Preferably, said opponent color space is the CIELab color space. Preferably, said clustering uses a spectral clustering method.

Preferably, said computing or determining of a chromatic/principal direction uses a Principal Component Analysis of the representative color variations of the chrominance cluster.

An object of the invention is also a method of color grading an image comprising:

- determining the chromatic component of illumination sources of said image according to the above method,
- building an adjustment map of the same size as said image, where pixels of this map corresponding to pixels between which at least one representative color variation has been computed are assigned an illumination adjustment value,
- propagating said illumination adjustment values within other pixels of said adjustment map,
- adding the filtered and propagated adjustment map to the chromatic components a and b of each pixel of the image, then providing a color graded image.

Such a method allows advantageously to simplify the color grading of images through an automatic estimation of multiple light sources in this image. Thanks to this method, the influence of the illumination and of the reflectance properties of the objects in the scene can be separated and content from disparate illuminating sources can be modified to attain a consistent color appearance.

An object of the invention is also a method of white balancing an image comprising:

- determining the chromatic component of illumination sources of said image according to the above method,
- building an adjustment map of the same size as said image, where pixels of this map corresponding to pixels between which at least one representative color variation has been computed are assigned an illumination adjustment value corresponding to chromatic component opposite to the chromatic component of illumination sources of the segmenting area represented by said at least one representative color variation,
- propagating said illumination adjustment values within other pixels of said adjustment map,
- adding the filtered and propagated adjustment map to the chromatic components a and b of each pixel of the image, then providing a white balanced image.

An object of the invention is also an apparatus for the determination of the chromatic component of illumination sources of an image comprising a processor configured for implementing the above method.

An object of the invention is also an apparatus for color grading an image comprising a processor configured for implementing the above method.

An object of the invention is also an apparatus for white balancing an image comprising a processor configured for implementing the above method.

An object of the invention is also an electronic device comprising such an apparatus. Such an electronic device may be notably an image capture device such as a camera, an image display device such as a TV set, a monitor, a head mounted display, or a set top box or a gateway. Such an electronic device may also be a smartphone or a tablet.

An object of the invention is also a computer program product comprising program code instructions to execute the steps of the above method, when this program is executed by a processor.

Brief description of drawings

The invention will be more clearly understood on reading the description which follows, given by way of non-limiting example and with reference to the appended figures in which:

- Figure 1 (a), 1 (b) and 1 (c) illustrate respectively an image as inputted for determination of chromatic components of its illumination sources according to the embodiment illustrated on figure 4, a segmented image as segmented through this embodiment, and color variations as computed and propagated within the image (for visualization purpose only) according to the same embodiment.

- Figure 2 illustrates a segmenting area obtained through the segmenting step of the embodiment of figure 4, with its centroid and its control pixels used in this embodiment for the computing of representative color variations.
- Figure 3 (a), 3 (b) and 3 (c) illustrate respectively, in the Lab color space, a cloud a representative color variations, two different chrominance clusters with their principal direction as computed according to the embodiment of figure 4, and hues computed from these chromatics directions according to the same embodiment.
- Figure 4 illustrates a flowchart of a main embodiment of the method to determine chromatic component of illumination sources of an image according to the invention.

Description of embodiments

It will be appreciated by those skilled in the art that flow charts presented herein represent conceptual views of illustrative circuitry embodying the invention. They may be substantially represented in computer readable media and so executed by a computer or processor, whether or not such computer or processor is explicitly shown. The functions of the various elements shown in the figures may be provided through the use of hardware capable of executing software in association with appropriate software. Such hardware capable of executing such software generally uses processor, controller, digital signal processor ("DSP") hardware, read-only memory ("ROM") for storing software, random access memory ("RAM"), and non-volatile storage.

The invention may notably be implemented by any device capable of implementing white balance of an image or color grading of an image. Therefore, the invention can be notably implemented in an image capture device such as a camera, an image display device such as a TV set, a monitor, a head mounted display, or a set top box or a gateway. The invention can also be implemented in a device comprising both an image capture display device and an image display device, such as a smartphone or a tablet. All such devices comprise hardware capable of executing software that can be adapted in a manner known per se to implement the invention.

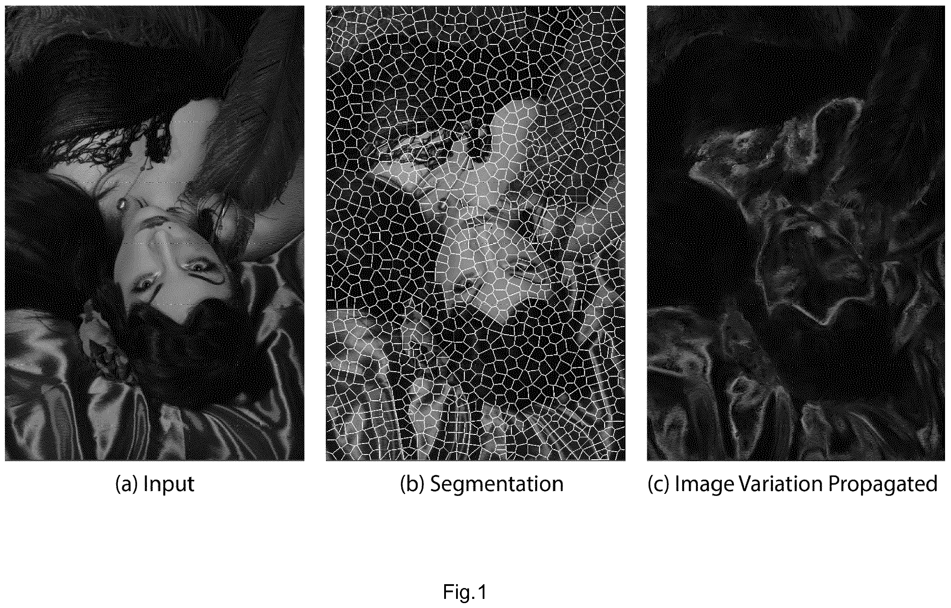

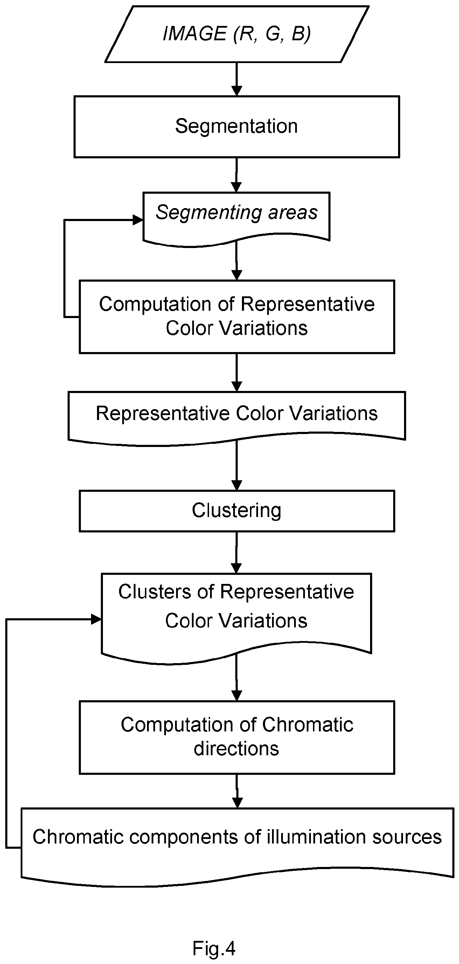

An image being provided to such a device, we will now describe in reference to figure 4 a **main embodiment** of determination of the chromatic component $a_i$, $b_i$ of the illumination sources $S_i$ of this image. An example of such an image is illustrated on figure 1 (a).

1st step: spatial segmentation of the image:

In this first step, using a semantic segmentation method, the image is segmented as illustrated on figure 1 (b) into a plurality of segmented areas. A semantic segmentation method is defined as a segmentation method that is adapted to separate the different objects represented in the image. It is noted that it is precisely at the borders of objects that only vectors that are normal to the surface of objects vary, when reflectance is constant, indirect lighting is constant and when only one illuminating source can be assumed.

In this main embodiment, as an example of such a semantic segmentation method, a superpixel based segmentation method described by Duan, Liuyun, and Florent Lafarge, in "Image partitioning into convex polygons", published in Computer Vision and Pattern Recognition (CVPR), 2015 IEEE Conference on, 2015, is used. This method creates a Voronoi partitioning of the image into a plurality of segmenting areas, both following the structure within this image and sampling well color gradient information, i.e. sampling well the variations of colors along different spatial directions crossing the image or these segmenting areas. When using this method, each superpixel forms a segmenting area.

Alternative segmentation methods can also be used, as long as they are consistent with the following properties for all elements of each segmenting area which is obtained : approximately constant reflectance, approximately constant indirect lighting and mainly one illuminating source. More precisely, in each segmenting area which is obtained:

- The reflectance $R(p), R(q)$ affecting any pixel p, q of said segmenting area should be approximately constant such that $R(p) \simeq R(q)$,
- The indirect lighting $L_{indirect}(p), L_{indirect}(q)$ affecting any pixel p, q of said segmenting area should be approximately constant such that $L_{indirect}(p) \simeq L_{indirect}(q)$,
- Mostly, the same illumination source should affect any pixel p, q of said segmenting area.

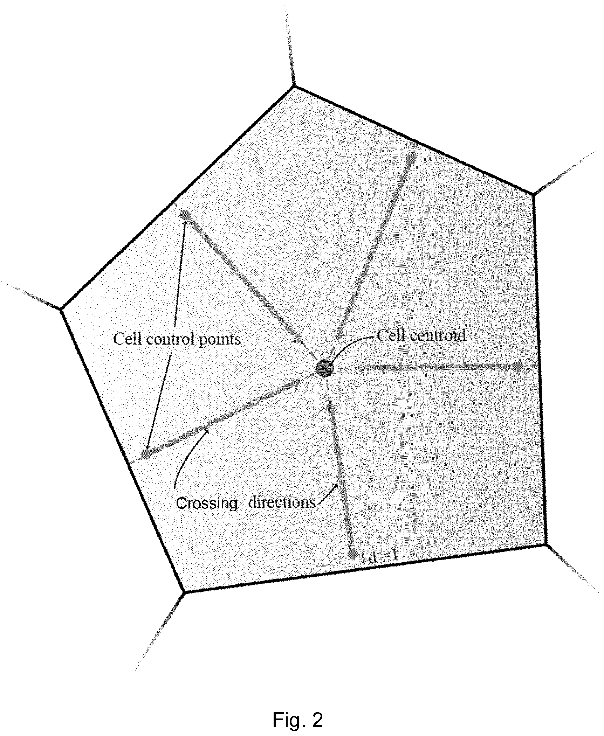

The number of segmenting areas obtained by this segmenting step can be controlled by a parameter $\in$ which can be manually set. A higher value leads to more segmenting areas, which follows more accurately the structure of the image, while a lower number leads to fewer segmenting areas but is faster to compute. An example of the segmentation of the image 1 (a) is shown on figure 1 (b). An example of a segmenting area is shown on figure 2.

2nd step: computation of at least one representative color variation in each segmenting area:

It is known that the color $I(p)$ of a pixel $p$ is given as a product between its reflectance $R(p)$ and its shading $S(p)$

such that:

$$I(p) = R(p) * S(p) \qquad (1)$$

As such a shading corresponds to the illumination of this pixel, equation (1) can be further expanded to distinguish between direct illumination $L_{direct}(p)$ of this pixel and its indirect illumination $L_{indirect}(p)$, such that we have:

$$I(p) = R(p) * \left(L_{direct}(p) + L_{indirect}(p)\right) \qquad (2)$$

For any nearby pixels p, q of the same segmenting area, from the above specific properties of the image segmentation, we know that $R(p) \simeq R(q)$, $L_{indirect}(p) \simeq L_{indirect}(q)$ and that these pixels p, q are mostly shaded by the same illumination source having a color $L_{RGB}(p)$ for instance given in the RGB color space of the image. According to these properties, the 1 D *color variation* along the direction *pq* of the image space is mainly due to variation of the direct lighting and can therefore be expressed as follows:

$$\Delta I(p, q) = R(p) * \Delta L_{direct}(p, q) \qquad (3)$$

In other words, information about potential changes in direct illumination between two nearby pixels *p* and *q* of the same segmenting area is representative of a value of color variation between them:

$$\Delta I(p, q) = R(p) * \mid L_{direct}(p) - L_{direct}(q)\mid \qquad (4)$$

The intensity of the common illumination illuminating these two nearby pixels *p* and *q* depends on the orientation of the surface of objects at points P and Q corresponding to theses pixels. Then, equation 4 can be further rewritten as follows:

$$\Delta I(p, q) = R(p) * \mid L_{RGB} * \left(\vec{n}(p) \cdot \vec{L}\right) - L_{RGB} * (\vec{n}(q) \cdot \vec{L})\mid (5)$$

$$\Delta I(p, q) = R(p) * \mid L_{RGB} * (\vec{n}(p) \cdot \vec{L} - \vec{n}(q) \cdot \vec{L})\mid \quad (6)$$

where $\overrightarrow{n(p)}$ is the unity vector normal to the surface at point P, $\overrightarrow{n(q)}$ is the unity vector normal to the surface at point Q of the scene, and $\vec{L}$ is the direction of this common illumination having the color $L_{RGB}(p)$, which is the same direction at point P and point Q.

Then, within each segmenting area $c_n$ within the image, different color variations are computed using equation 6 along different directions *pq* crossing this segmenting area $c_n$. These different color variations computed for the same segmenting area are representative of this segmenting area.

As illustrated on figure 2, such crossing directions to sample different color variations within each segmenting area can for instance be defined by straight line segments starting at a centroid pixel of the segmenting area and ending at a control pixel of this segmenting area. As illustrated on figure 2, control pixels can be defined inside the segmenting area on a crossing straight line perpendicular to an edge of this segmenting area and passing through its centroid. In this implementation, these control pixels are selected on these crossing lines at a distance d = 1 pixel inwards from the edge.

Color variation values are computed along these crossing directions for all three RGB components of the colors. All these RGB color variations computed in image space define a cloud of color variations in RGB color space. Each point of this cloud of the RGB color space corresponds for instance to a RGB color variation computed between two pixels of a same segmenting area of the image space, these two pixels belonging to a direction crossing this segmenting area.

Any other method to sample pixels of a segmenting area that are considered to compute color variations values can be used instead.

Each segmenting area of the image can then be represented by as many RGB color variations points as the number of control pixels defined in this segmenting area.

To simplify the computation of the next step, it is preferred to have only one representative RGB color variation point for each segmenting area. Such a single representative RGB color variation of a segmenting area is computed in function of all the different RGB color variations computed for this segmenting area. In the present embodiment, for each color channel R, G and B, this single representative color variation is computed as the maximum of the different color variations computed for this color channel. As a variation, this single representative color variation can be computed as the average or the median of the different color variations computed for this color channel.

When computing a single representative color variation for each segmenting area, all single representative RGB color variations define a cloud of representative color variations in RGB color space.

3<u>rd</u> step: in an opponent color space, chrominance clustering of color variations representative of segmenting areas:

In any segmenting area of the image, defining if a representative color variation as computed above is due to reflectance change or to lighting change cannot be disambiguated. But, if color variations are mainly due to a single illuminating light for one similar reflectance, this set of these color variations captured in image space will define a 3D line within an opponent color space. An opponent color space is preferred over RGB color space, due to its ability to separate luminance information from chrominance information.

Estimating these 3D lines for an image shaded by different illuminants in presence of different reflectances requires to partition the 3D cloud of color variations representative of all segmenting area into different chrominance clusters. For computing performance reasons, only one representative color variation will be used for each segmenting area in the implementation below, but the same implementation can be used if more than one representative color variation is used for each segmenting area.

For such a partition of the 3D cloud of representative color variations, the RGB components of these representative color variations are converted in components representing the same color variations in an opponent color space separating chrominance from luminance and then these color variations are grouped according to a similarity of their chrominance components within this opponent color space

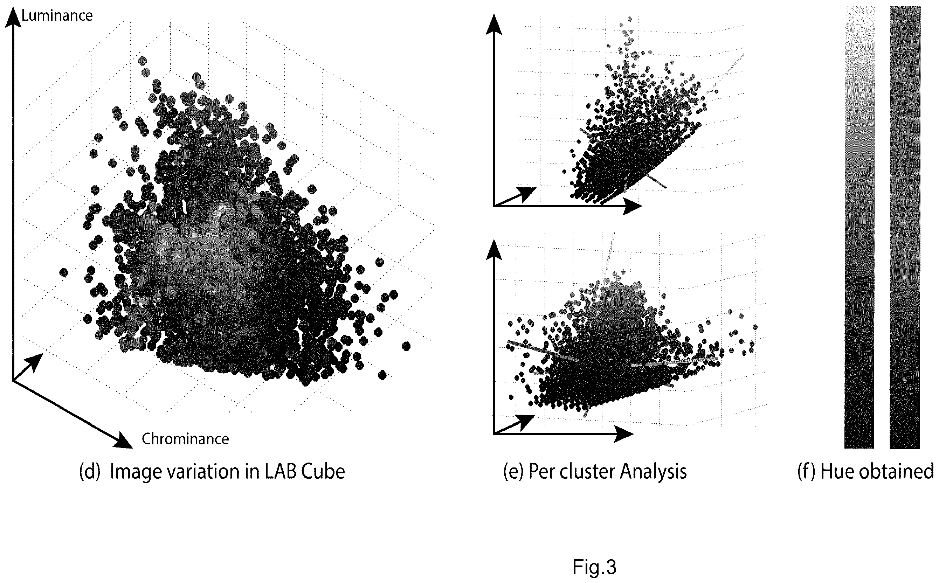

In a preferred implementation, the CIELab space is used as an opponent color space separating chrominance from luminance, and known color space conversion formulas are used for the above conversion. Figure 3 (e) illustrates, in this Lab color space, a cloud of representative color variations corresponding to the different segmenting areas of the image. In this figure, the luminance axis is up oriented.

Through this chrominance grouping or clustering step, the cloud of representative color variations is divided into different chrominance clusters such that each chrominance cluster groups representative color variations having chromatic similarities. It means that the similarity weight between two representative color variations that is used for this chrominance clustering step should be a decreasing function of a chromatic distance between these two representative color variations. It means also that this clustering step does not take into account the luminance components of the representative color variations, but only their chromatic components, generally named an and b in the Lab color space. A chromatic similarity value $Sim_{hue}$ between two points m, n of the cloud of representative color variations is computed from the chromatic components $a_m$, $a_n$ and $b_m$, $b_n$ of respectively these two points m and n, using for instance the following similarity function:

$$Sim_{hue} = \exp\left(-\frac{\sqrt{(a_m - a_n)^2 + (b_m - b_n)^2}}{2.0 * \sigma^2}\right) \qquad (7)$$

where $\sigma$ is a normalization constant defined according to the opponent color space. In CIE Lab, we have for instance set $\sigma = 4$.

In this chrominance clustering step, no spatial distance between segmenting areas represented by the representative color variations is involved.

Any other clustering approach using a chromatic similarity measure between two representative color variations is suitable to partition the cloud of color variations into chrominance clusters.

A **spectral clustering** method is preferably used for such clustering, because such a method can automatically determine the appropriate number of chrominance clusters needed according to the color variations cloud, therefore avoiding the need for a user-parameter. The article entitled "Normalized Cuts and Image Segmentation", published on August 2000 by Jianbo Shi and Jitendra Malik in IEEE TRANSACTIONS on pattern analysis and machine intelligence, Vol.22, N°8, gives an example of such a spectral clustering method which is applied to segmenting areas of an image. Alternative clustering methods can be used instead, such as a simpler k-means clustering with a user-defined value of $k$ for the number of clusters.

Using a spectral clustering method applied to representative color variations, the following three sub-steps are for instance implemented:

- First, a similarity matrix is built between all representative color variations within the cloud, using the similarity function described in equation 7 above. The size of this square matrix depends on the number of representative color variations considered.
- The normalized Laplacian of this similarity matrix is estimated.
- An eigen-decomposition is performed on the obtained laplacian matrix to determine the connexity between all color variations.
- Then, the most representative eigenvectors are selected by observing their eigenvalues.

Then, the first eigenvalues are ordered in increasing order, until the ratio between two subsequent eigen-values exceeds a threshold $\tau_{eigen}$, set to 0.98 in this implementation. Note that the smallest eigenvalue is ignored. The output of this sub-step provides the number $k$ of chrominance clusters that are necessary to sufficiently describe the representative color variations in the cloud.

To assign a chrominance cluster to each representative color variation from the cloud, a matrix U of dimension $l, N$ is built, where $l$ is the number of most representative eigenvectors (as determined above) and $N$ is the number of representative color variations considered within the cloud. This matrix is built such as the eigen vectors are the columns. K-means clustering is then applied on the rows of U using the number of clusters $k$ determined in the previous sub-step.

At the end of this 3rd step, whatever a spectral clustering method is used or not, each representative color variation is grouped per similarity of chrominance.

4th step: computing hue of the illumination source common to the different segmenting areas belonging to the same chrominance cluster:

Due to the semantic segmenting method used to segment the image, it has been shown above that all pixels of a segmenting area from which representative color variations are computed have approximate constant reflectance, approximate constant indirect lighting and are mostly illuminated by a single illumination source. As shown above, representative color variations are represented in the Lab color space by luminance variations and by hue variations. The chromatic components of a representative color variation correspond this hue variation.

To find the hue of illumination specific to each chrominance cluster, it will now be assumed that within each chrominance cluster the strongest luminance variations will be mainly due to variations of light intensity of a common illumination source. It means that representative color variations having the highest luminance variation components in a same chrominance cluster are oriented along a direction representative of the hue of the illumination source of the chrominance cluster. Determining this direction allows to separate the influence of the illumination and of the reflectance properties of the objects in the scene. Then, the chromatic components $a_i$, $b_i$ of the intersection of this representative direction with the plane of maximum luminance, in the case of CIELab $L$ = 100, is considered as the hue

$$h_i = \arctan\left(\frac{b_i}{a_i}\right)$$ of this illumination source.

In other words, it is assumed that the representative color variations of a same chrominance cluster that have the highest luminance variation component are assumed to be distributed along a direction representative of the hue of the illumination source of this chrominance cluster and have likely the lowest chromatic variations, showing a somehow constant hue along this direction.

To find such a representative direction in each chrominance cluster, a Principal Component Analysis can be advantageously performed on the representative color variations of this chrominance cluster $i$ such as to determine in the Lab color space a direction exhibiting the strongest variation in the luminance component of these representative color variations. Since the chrominance cluster data are defined on an opponent color space (here the CIELab), they are 3dimensional data. As such, the Principal Component Analysis performed on the representative color variations of a chrominance cluster provides three principal components, each of those representing a vector from the mean of this chrominance cluster towards a direction defined within the opponent color space. The vector corresponding to the strongest variation in the luminance component determines the direction to consider.

Then, the chromatic components $a_i$, $b_i$ of the intersection of this direction with the plane of maximum luminance

$L$ = 100 provides the hue $h_i = \arctan\left(\frac{b_i}{a_i}\right)$ of the illumination source common to all segmenting areas represented by the different representative color variations of this chrominance cluster. Globally, it means that, based on Equation 6 above, from an analysis of a collection of different pairs of nearby pixels within the image, sufficient color information can be obtained to rebuild the variation of each illumination source of this image and therefore to estimate the hue of the different illumination sources illuminating this image.

Application of the determination of the chromatic component $a_i$, $b_i$ of the illumination sources $S_i$ for each cluster $i$ of segmenting areas of an image for the color grading of this image:

It is well known to apply data concerning the illumination of an image for the color grading of this image. US7688468 (CANON) discloses for instance a method that predicts final color data viewed under a final illuminant from initial color data viewed under an initial illuminant.

Using the chromatic *component $a_i$ , $b_i$* of an illumination source $S_i$ as determined above for a chrominance cluster of segmenting areas of an image as determined above, such a color grading of an image can for instance be performed as follows, here in the context of processing in the CIELab color space:

1) Having determined chromatic components of illumination sources illuminating this image through the above method, Inputting illumination adjustment hue $\delta a_i$ and $\delta b_i$ to be added to the chromatic components $a_i$, $b_i$ of an illumination source $S_i$, or inputting directly the corrected hue $a_i + \delta a_i$, $b_i + \delta b_i$ for this illumination source $S_i$. This input can be achieved for instance through a specific user interface allowing the user to enter these data for each illumination source that has been determined for the image.

2) Building an adjustment map $M_{adjust-i}$, of the same size as the image $I$, where pixels of this map corresponding to control points and centroid points of segmenting areas belonging to the cluster $i$ of this illumination source $S_i$, obtain illumination adjustment values $\delta a_i$ and $\delta b_i$.

3) Filtering the adjustment map $M_{adjust-i}$, using the input image as the edge map, so that the propagation of illumination adjustment values within the adjustment map stops at image edges. By performing such an edge-respecting filtering, the input image acts as a driven weighted filter on the adjustment map. Through such a filtering, adjustment values of each control point and centroid point of segmenting areas belonging to the cluster $i$ are propagated smoothly to all other pixels of the image, while respecting object boundaries. In a preferred implementation, this filtering step uses the Domain Transform filter of Gastal Eduardo SL and Manuel M. Oliveira, described in the article entitled "Domain transform for edge-aware image and video processing", published on 2011 in ACM Transactions on Graphics (TOG) Vol. 30. No. 4.

4) Adding the filtered and propagated adjustment map $M_{adjust-i}$ to the chromatic components an and b of each pixel of the image, then providing a color graded image.

The color graded image that is obtained can be finally converted back to the RGB space for display, using any existing color gamut mapping method if necessary to ensure that RGB values do not exceed the target display gamut.

The above embodiments show that the method of determination of chromatic components of the illuminations sources of an image as described above allow then advantageously to modify the colors of illumination of an image without any prior knowledge of the scene geometry or the illumination configuration.

Application of the determination of the chromatic component $a_i$, $b_i$ of the illumination sources $S_i$ for each cluster $i$ of segmenting areas of an image for the automatic white balancing of this image:

The above section related to background art mentions existing automatic methods for computing white balance of an image. The automatic determination of the chromatic *component $a_i$ , $b_i$* of the illumination sources $S_i$ for each cluster $i$ of segmenting areas of an image as described above can be advantageously used for computing white balance of an image, notably by pushing these chromatic components $a_i$ , $b_i$ towards the achromatic point [$a = 0$, $b = 0$].

Such a white balance is for instance obtained as follows according to a first embodiment:

1) For each illumination source $S_i$, building an adjustment map $M_{adjust-i}$, of the same size as the image $I$, where pixels corresponding to control points and centroid points of segmenting areas belonging to the color variation cluster $i$ of this illumination source $S_i$, obtain chromatic adjustment values $\delta a_i = -a_i$ and $\delta b_i = -b_i$.

2) Filtering and propagating each adjustment map $M_{adjust-i}$ as in the color grading method above.

3) Adding all the filtered and propagated adjustment map $M_{adjust-i}$ obtained for each cluster $i$ to the chromatic components a and b of each pixel of the image, then providing a white balanced image.

In a second embodiment of such an automatic white balancing application, we take the chromatic component $a_i$ , $b_i$ of the illumination sources $S_i$ for each cluster $i$ of segmenting areas of the image as determined above. For each segmented area, we define a correction locally for each crossing direction between control points and centroid point obtained using Equation 6 previously. This local correction for each crossing direction takes as parameters:

a. The illumination source $S_i$ for this segmented area, defined by $a_i$ , $b_i$

b. The color variations within this crossing direction, defined by $a_p$ , $b_p$

We estimate the adjustment values $\delta a_p$, $\delta b_p$ to perform this correction such as $\delta a_p = -a_i$ and $\delta b_p = -b_i$ only if $vec(a_p, b_p) \cdot vec(a_i, b_i) > 0$, otherwise, $\delta a_p = 0$ and $\delta b_p = 0$.

Then:

1) For each illumination source $S_i$, we build an adjustment map $M_{adjust-i}$, of the same size as the image $I$, where pixels corresponding to control points and centroid points of segmenting areas belonging to the color variation cluster $i$ of this illumination source $S_i$, obtain chromatic adjustment values $\delta a_p$, $\delta b_p$

2) we filter and propagate each adjustment map $M_{adjust-i}$ as in the color grading method above.

3) We add all the filtered and propagated adjustment map $M_{adjust-i}$ obtained for each cluster $i$ to the chromatic components a and b of each pixel of the image.

We get then a white balanced image.

In a third embodiment of such an automatic white balancing application, the user can aid the process by clicking on an area of the image that represents a white surface (e.g. a white wall or paper). In this embodiment, the chromatic adjustment values $\delta a_i$ and $\delta b_i$ of the first embodiment above are computed according to this constraint. This ensures that a specific white surface is accurately white balanced and used as a stronger constraint compared to the first embodiment.

The above embodiments show that the method of determination of chromatic components of the illuminations sources of an image as described above allow then advantageously for white balancing of scenes under complex mixed illumination automatically, while methods of the prior art requires adding scribbles to provide information to the white balancing algorithm.

It should also be noted that the method of determination of chromatic components of the illuminations sources of an image as described above could also be used directly in an Augmented Reality application, to provide an estimation of the illumination of the real scene for accurately lighting the synthetic objects that might be added in the scene.

Globally, the method of determination of chromatic components of the illuminations sources of an image as described above can be advantageously implemented in real time, for instance on mobile devices (e.g. tablet) to modify or to white-balance photographs on the fly.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims. The present invention as claimed therefore includes variations from the particular examples and preferred embodiments described herein, as will be apparent to one of skill in the art.

While some of the specific embodiments may be described and claimed separately, it is understood that the various features of embodiments described and claimed herein may be used in combination.

**Claims**

1. Method to determine chromatic components ($a_i$, $b_i$) of illumination sources ($S_i$) of an image comprising:

   - segmenting said image into segmenting areas using a semantic segmenting method,
   - for each of said segmenting areas, computing at least one representative color variation between pixels positioned in said segmenting area,
   - in an opponent color space separating chrominance from luminance, clustering said representative color variations into chrominance clusters, according to a chromatic similarity criteria computed between said representative color variations,
   - in each chrominance cluster ($i$), determining in said opponent color space a principal direction along which representative color variations of this chrominance cluster have the highest luminance variation components, the chromatic components of the intersection of this principal direction with the plane of highest luminance of said opponent color space being then considered as the chromatic components ($a_i$, $b_i$) of the illumination source ($S_i$) common to the different segmenting areas represented by the representative color variations of this chrominance cluster ($i$).

2. Method to determine chromatic components ($a_i$, $b_i$) of illumination sources ($S_i$) of an image according to claim 1, wherein said semantic segmenting method is such that, within each segmenting area, approximate constant reflectance, approximate constant indirect lighting and mostly one illuminating source can be assumed.

3. Method to determine chromatic components ($a_i$, $b_i$) of illumination sources ($S_i$) of an image according to claim 1 or 2, wherein said pixels between which representative color variations of a segmenting area are computed comprises control pixels distributed along directions crossing said segmenting area passing through a centroid of said segmenting area.

4. Method to determine chromatic components ($a_i$, $b_i$) of illumination sources ($S_i$) of an image according to any one of claims 1 to 3, wherein said chromatic similarity criteria is computed between the chromatic components (a, b) of said representative color variations.

5. Method to determine chromatic components ($a_i$, $b_i$) of illumination sources ($S_i$) of an image according to any one of claims 1 to 4, wherein said clustering uses a spectral clustering method.

6. Method to determine chromatic components ($a_i$, $b_i$) of illumination sources ($S_i$) of an image according to any one of claims 1 to 5, wherein said computing of a principal direction uses a Principal Component Analysis of the representative color variations of the chrominance cluster ($i$).

7. Method of color grading an image comprising:

   - determining the chromatic components ($a_i$, $b_i$) of illumination sources ($S_i$) of said image according to the method of any one of claims 1 to 6,
   - building an adjustment map ($M_{adjust-i}$) of the same size as said image, where pixels of this map corresponding to pixels between which at least one representative color variation has been computed are assigned an illumination adjustment value ($\delta a_i$, $\delta b_i$),
   - propagating said illumination adjustment values within other pixels of said adjustment map ($M_{adjust-i}$),
   - adding the filtered and propagated adjustment map ($M_{adjust-i}$) to the chromatic components a and b of each pixel of the image, then providing a color graded image.

8. Method of white balancing an image comprising:

   - determining the chromatic components ($a_i$, $b_i$) of illumination sources ($S_i$) of said image according to the method of any one of claims 1 to 5,
   - building an adjustment map ($M_{adjust-i}$) of the same size as said image, where pixels of this map corresponding to pixels between which at least one representative color variation has been computed are assigned an illumination adjustment value ($\delta a_i$, $\delta b_i$) corresponding to chromatic component ($-a_i$, $-b_i$) opposite to the chromatic component ($a_i$, $b_i$) of illumination sources ($S_i$) of the segmenting area represented by said at least one representative color variation,
   - propagating said illumination adjustment values within other pixels of said adjustment map ($M_{adjust-i}$),
   - adding the filtered and propagated adjustment map ($M_{adjust-i}$) to the chromatic components a and b of each pixel of the image, then providing a white balanced image.

9. Apparatus for the determination of the chromatic components ($a_i$, $b_i$) of illumination sources ($S_i$) of an image comprising a processor configured for:

   - segmenting said image into segmenting areas using a semantic segmenting method,
   - for each of said segmenting areas, computing at least one representative color variation between pixels positioned in said segmenting area,
   - in an opponent color space separating chrominance from luminance, clustering of said representative color variations into chrominance clusters, according to a chromatic similarity criteria computed between said representative color variations,
   - in each chrominance cluster ($i$), determining in said opponent color space a principal direction along which representative color variations of this chrominance cluster have the highest luminance variation components, the chromatic components of the intersection of this principal direction with the plane of highest luminance of said opponent color space being then considered as the chromatic components ($a_i$, $b_i$) of the illumination source ($S_i$) common to the different segmenting areas represented by the representative color variations of this chrominance cluster.

10. Apparatus for color grading an image comprising a processor configured for:

- determining the chromatic components ($a_i$, $b_i$) of illumination sources ($S_i$) of said image according to the method of any one of claims 1 to 6,
- building an adjustment map ($M_{adjust-i}$) of the same size as said image, where pixels of this map corresponding to pixels between which at least one representative color variation has been computed are assigned an illumination adjustment value ($\delta a_i$, $\delta b_i$),
- propagating said illumination adjustment values within other pixels of said adjustment map ($M_{adjust-i}$),
- adding the filtered and propagated adjustment map ($M_{adjust-i}$) to the chromatic components a and b of each pixel of the image, then providing a color graded image.

**11.** Apparatus for white balancing an image comprising a processor configured for:

- determining the chromatic components ($a_i$, $b_i$) of illumination sources ($S_i$) of said image according to the method of any one of claims 1 to 5,
- building an adjustment map ($M_{adjust-i}$) of the same size as said image, where pixels of this map corresponding to pixels between which at least one representative color variation has been computed are assigned an illumination adjustment value ($\delta a_i$, $\delta b_i$) corresponding to chromatic component ($-a_i$, $-b_i$) opposite to the chromatic component ($a_i$, $b_i$) of illumination sources ($S_i$) of the segmenting area represented by said at least one representative color variation,
- propagating said illumination adjustment values within other pixels of said adjustment map ($M_{adjust-i}$),
- adding the filtered and propagated adjustment map ($M_{adjust-i}$) to the chromatic components a and b of each pixel of the image, then providing a white balanced image.

**12.** Electronic device comprising an apparatus according to any one of claims 9 to 11.

**13.** A computer program product comprising program code instructions to execute the steps of the method according to any one of the claims 1 to 8, when this program is executed by a processor.

(a) Input    (b) Segmentation    (c) Image Variation Propagated

Fig.1

Fig. 2

(d) Image variation in LAB Cube     (e) Per cluster Analysis     (f) Hue obtained

Fig.3

IMAGE (R, G, B)

↓

Segmentation

↓

Segmenting areas

↓

Computation of Representative
Color Variations

↓

Representative Color Variations

↓

Clustering

↓

Clusters of Representative
Color Variations

↓

Computation of Chromatic
directions

↓

Chromatic components of illumination sources

Fig.4

Europäisches
Patentamt

European
Patent Office

Office européen
des brevets

**EUROPEAN SEARCH REPORT**

Application Number

EP 17 17 0344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIJSENIJ A ET AL: "Color Constancy for Multiple Light Sources", IEEE TRANSACTIONS ON IMAGE PROCESSING, IEEE SERVICE CENTER, PISCATAWAY, NJ, US, vol. 21, no. 2, 1 February 2012 (2012-02-01), pages 697-707, XP011412017, ISSN: 1057-7149, DOI: 10.1109/TIP.2011.2165219 * Abstract Section II, B and equation 3 Section III, step 1-3 * ----- | 1-13 | INV. G06T7/90 |
| A | JOOST VAN DE WEIJER ET AL: "Edge-Based Color Constancy", IEEE TRANSACTIONS ON IMAGE PROCESSING, IEEE SERVICE CENTER, PISCATAWAY, NJ, US, vol. 16, no. 9, 1 September 2007 (2007-09-01), pages 2207-2214, XP011189820, ISSN: 1057-7149, DOI: 10.1109/TIP.2007.901808 * Section III * ----- | 1-13 | TECHNICAL FIELDS SEARCHED (IPC) G06T |
| A,D | MICHAEL BLEIER; CHRISTIAN RIESS; SHIDA BEIGPOUR; EVA EIBENBERGER; ELLI ANGELOPOULOU; TOBIAS TROGER; ANDRE KAUP: "Color constancy and non-uniform illumination: Can existing algorithms work?", COMPUTER VISION WORKSHOPS (ICCV WORKSHOPS), 2011 IEEE INTERNATIONAL CONFERENCE ON, 2011, pages 774-781, XP002763901, * Setion III * ----- -/-- | 1,9 | |

The present search report has been drawn up for all claims

| Place of search | Date of completion of the search | Examiner |
|---|---|---|
| Munich | 4 August 2017 | Nicolau, Stephane |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 17 0344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | SHIDA BEIGPOUR; CHRISTIAN RIESS; JOOST VAN DE WEIJER; ELLI ANGELOPOULOU: "Multi-illuminant estimation with conditional random fields", IMAGE PROCESSING, IEEE TRANSACTIONS ON, vol. 23, no. 1, 2014, pages 83-96, XP002763902, * Section VI, A * | 1,9 | |
| A | GIJSENIJ A ET AL: "Computational Color Constancy: Survey and Experiments", IEEE TRANSACTIONS ON IMAGE PROCESSING, IEEE SERVICE CENTER, PISCATAWAY, NJ, US, vol. 20, no. 9, 1 September 2011 (2011-09-01), pages 2475-2489, XP011411847, ISSN: 1057-7149, DOI: 10.1109/TIP.2011.2118224 * the whole document * | 1-9 | |

TECHNICAL FIELDS
SEARCHED    (IPC)

The present search report has been drawn up for all claims

| Place of search | Date of completion of the search | Examiner |
|---|---|---|
| Munich | 4 August 2017 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7688468 B

### Non-patent literature cited in the description

- **MICHAEL BLEIER ; CHRISTIAN RIESS ; SHIDA BEIGPOUR ; EVA EIBENBERGER ; ELLI ANGELOPOULOU ; TOBIAS TROGER ; ANDRÉ KAUP.** Color constancy and non-uniform illumination: Can existing algorithms work?. *Computer Vision Workshops (ICCV Workshops), 2011 IEEE International Conference,* 2011, 774-781
- **SHIDA BEIGPOUR ; CHRISTIAN RIESS ; JOOST VAN DE WEIJER ; ELLI ANGELOPOULOU.** Multi-illuminant estimation with conditional random fields. *Image Processing, IEEE Transactions,* 2014, vol. 23 (1), 83-96
- **DUAN, LIUYUN ; FLORENT LAFARGE.** Image partitioning into convex polygons. *Computer Vision and Pattern Recognition (CVPR), 2015 IEEE Conference,* 2015
- **JIANBO SHI ; JITENDRA MALIK.** Normalized Cuts and Image Segmentation. *IEEE TRANSACTIONS on pattern analysis and machine intelligence,* August 2000, vol. 22 (8
- Domain transform for edge-aware image and video processing. *ACM Transactions on Graphics (TOG),* 2011, vol. 30 (4